# EUROPÄISCHE PATENTSCHRIFT

(11) **EP 1 507 069 B1**
(45) Veröffentlichungstag und Bekanntmachung des Hinweises auf die Patenterteilung: **24.01.2007**
(21) Anmeldenummer: 04015671.3
(22) Anmeldetag: 02.07.2004
(51) Int. Cl.: F01K 23/10

(54) **Verfahren und Einrichtung zur Gewinnung von Wasser bei einer Kraftwerksanlage**
Method and installation for recovering water in a power plant
Procédé et installation de récupération d'eau dans une centrale d'énergie

(30) Priorität: 13.08.2003 DE 10337240
(43) Veröffentlichungstag der Anmeldung: 16.02.2005
(73) Patentinhaber: SIEMENS AKTIENGESELLSCHAFT, 80333 München (DE)
(72) Erfinder: Ahrens-Botzong, Rudolf, Dr., 67071 Ludwigshafen (DE); Gralla, Eberhard, 91325 Adelsdorf (DE); Schmidt, Dietmar, Dr., 91341 Röttenbach (DE)

(56) Entgegenhaltungen:
- EP-A- 1 132 594
- WO-A-92/21859
- DE-A- 4 227 146
- FR-A- 2 334 825
- DATABASE EPODOC EUROPEAN PATENT OFFICE, THE HAGUE, NL; XP002309958 & IT 1 256 878 B (CARROZZERIA BERTONE SPA) 27. Dezember 1995 (1995-12-27)

## Beschreibung

Die Erfindung betrifft ein Verfahren zur Gewinnung von Wasser bei einer Kraftwerksanlage sowie eine entsprechende Einrichtung.

Der Betrieb einiger Komponenten einer Kraftwerksanlage erfordert die Bereitstellung von Wasser. Beispielsweise wird bei einer Dampfkraftanlage für den Wasser-Dampfkreislauf eine große Menge an Wasser benötigt, um daraus die erforderliche Menge an Betriebs- und Hilfsdampf zu erzeugen.

Des Weiteren muss ein Wasservorrat während des Betriebs laufend ergänzt werden, da infolge von Verlusten die Menge an Wasser im Wasser-Dampfkreislauf abnimmt.

Die Bereitstellung bzw. Ergänzung von Wasser für Kraftwerksanlagen ist in der Regel in solchen Gebieten problemlos zu bewerkstelligen, wo ausreichend Wasserquellen zur Verfügung stehen oder wo ein gut ausgebautes Versorgungsnetz installiert ist.

Dagegen besteht insbesondere in wasserarmen Regionen das Problem, die für den Kraftwerksbetrieb erforderliche Menge an Wasser zur Verfügung zu stellen und aufrechtzuerhalten.

FR-A-2 334 825 beschreibt ein Verfahren und eine Vorrichtung zur Gewinnung von Wasser in einer Kraftwerksanlage mit einer Gas- und einer Dampfturbine, wobei Abgase der Gasturbine in einem Rekuperator mittels eines Wärmeaustauchelements abgekühlt werden, sodass in dem Rekuperator Wasser kondensiert, das weiterverwendet werden kann. Die abgekühlten Abgase aus dem Rekuperator werden zur Atmosphäre geleitet. Dies ist im Hinblick auf in den Abgasen enthaltene Schadstoffe nicht umweltgerecht, da Ressourcen dadurch belastet werden können.

Der Erfindung liegt daher die Aufgabe zugrunde, ein Verfahren und eine Einrichtung zur Gewinnung von Wasser bei einer Kraftwerksanlage anzugeben, welche besonders ressourcenschonend sind.

Bezüglich des Verfahrens wird die Aufgabe erfindungsgemäß gelöst durch ein Verfahren zur Gewinnung von Wasser bei einer Kraftwerksanlage, welche mindestens eine Gasturbine umfasst, wobei zumindest ein Teil des Abgases der Gasturbine mittels einer Wärmepumpe unter dessen Taupunkt abgekühlt wird.

Die Erfindung geht dabei von der Überlegung aus, dass das Abfallprodukt einer Gasturbine, nämlich deren Abgasstrom, einen gewissen Wasseranteil enthält. Diese Feuchtigkeit im Gasturbinenabgas wird gemäß der Erfindung dadurch abgeschieden, dass der Abgasstrom mindestens soweit abgekühlt wird, dass der Taupunkt des Abgases, welcher beispielsweise im Bereich von etwa 43°C liegt, unterschritten wird, so dass sich der im Abgas enthaltene Wasseranteil niederschlägt und das sich dabei bildende Wasser abgeschieden und für den Kraftwerksbetrieb genutzt werden kann.

Mittels der Erfindung entfällt insbesondere eine kostenaufwendige und gegebenenfalls sogar umweltschädigende Beschaffung von Wasser oder Ergänzungswasser für eine Kraftwerksanlage.

Das Abgas wird mittels einer Wärmepumpe abgekühlt. Eine Wärmepumpe ist eine Vorrichtung, mittels welcher einem Strömungsmedium durch Wärmetausch Energie entzogen wird. Dabei wird ein Kühlmittel, beispielsweise Wasser, benutzt, welches die Wärme des Strömungsmediums aufnimmt und beispielsweise in einem weiteren Wärmetausch auf ein Heizmedium, beispielsweise wiederum Wasser, überträgt.

Das Abgas wird der Wärmepumpe zugeführt, welche den Wärmeinhalt des Abgases zumindest teilweise auf ein Kühlmittel überträgt und somit dem Abgasstrom entzieht, so dass eine Unterschreitung des Taupunkts des Abgases erreicht werden kann.

Vorteilhaft umfasst die Kraftwerksanlage einen Abhitzekessel, in welchen das Abgas der Gasturbine eingeleitet wird.

Da das Abgas der Gasturbine wegen seiner hohen Temperatur noch einen relativ großen Energieinhalt aufweist, kann bei dieser Ausführungsform dieser Energieinhalt mittels des Abhitzekessels genutzt werden, beispielsweise zur Erzeugung von Betriebsdampf einer Dampfturbine oder Hilfsdampf für eine Reihe von anderen Kraftwerkskomponenten.

Bevorzugt wird dabei die Abkühlung des Abgases am kalten Ende des Abhitzekessels vorgenommen.

Das kalte Ende des Abhitzekessels ist der Bereich, nach welchem das Abgas aus dem Abhitzekessel ausgeleitet wird. Das heiße Abgas hat also vorher schon eine Strecke im Abhitzekessel durchlaufen, wobei es mittels Wärmetausch Energie abgegeben hat, z.B. an Heizflächen und Überhitzer zur Erzeugung von Dampf.

Bevor das Abgas aus dem Abhitzekessel ausgeleitet wird, wird es bei dieser Ausführungsform unter dessen Taupunkt abgekühlt, um den Wasseranteil abscheiden zu können. Da die Abkühlung eine Erniedrigung des Energieinhalts des Abgases beinhaltet, wird die Abkühlung bei der vorliegenden Ausführungsform erst dann vorgenommen, wenn das Abgas bereits den wichtigsten Teil seiner arbeitsleistenden Strecke, während welcher das Abgas mittels Wärmetausch zur Dampferzeugung genutzt wird, durchlaufen hat. Weiterhin ist der erforderliche Aufwand für die Abkühlung des Abgases reduziert, wenn das Abgas nach verlassen der Gasturbine im Abhitzekessel bereits infolge dessen Nutzung zur Dampferzeugung abgekühlt wird, so dass die bei der Abkühlung zu überwindende Temperaturdifferenz verkleinert ist.

Die Wärmepumpe kann einen Verdampfer und einen Verflüssiger umfassen, wobei das Abgas mittels des Verdampfers abgekühlt und danach mittels des Verflüssigers aufgeheizt wird.

Bei dieser Ausführungsform ist das Strömungsmedium, welchem Energie entzogen werden soll und das Heizmedium, welchem Energie zugeführt werden soll identisch und durch den Abgasstrom gebildet. Das Abgas wird also mittels des Verdampfers der Wärmepumpe zunächst unterhalb dessen Taupunkts abgekühlt, so dass das dabei anfallende Wasser abgeschieden werden kann und anschließend wird der zuvor abgekühlte Abgasstrom wieder aufgeheizt.

Das Abgas weist also bei dieser Ausführungsform nach dem Verlassen des Abhitzekessels wieder eine Temperatur oberhalb dessen Taupunkts auf, was insbesondere für gegebenenfalls durchzuführende, nachgeschaltete Maßnahmen der Schadstoffbehandlung vorteilhaft ist.

Vor der Zuleitung des Abgases zum Verdampfer besitzt das Abgas beispielsweise eine Temperatur von etwa 98°C, wird durch den Verdampfer auf eine Temperatur von etwa 40°C abgekühlt, wobei der Wasseranteil im Abgas abgeschieden wird, und das Abgas wird anschließend mittels des Verflüssigers wieder aufgeheizt auf etwa 90°C.

Vorteilhaft ist die Kraftwerksanlage ausgebildet als ein Gas- und Dampfkraftwerk.

Derartige Kraftwerksanlagen weisen insbesondere einen hohen Wirkungsgrad auf.

Die Erfindung führt weiterhin zu einer Einrichtung zur Gewinnung von Wasser bei einer Kraftwerksanlage, welche mindestens eine Gasturbine umfasst, wobei mindestens eine Wärmetauschvorrichtung, mittels welcher mindestens ein Teil des Abgases der Gasturbine unter dessen Taupunkt abkühlbar ist, vorgesehen ist. Die Wärmetauschvorrichtung ist eine Wärmepumpe.

Vorteilhaft umfasst die Kraftwerksanlage einen Abhitzekessel, in welchen das Abgas der Gasturbine einleitbar ist.
Dabei ist die Wärmetauschvorrichtung bevorzugt am kalten Ende des Abhitzekessels angeordnet.

Die Wärmepumpe umfasst bevorzugt einen Verdampfer und einen Verflüssiger, wobei das Abgas mittels des Verdampfers abgekühlt und danach mittels des Verflüssigers aufgeheizt wird.

Vorteilhaft ist die Kraftwerksanlage ausgebildet als ein Gas- und Dampfkraftwerk.

Im folgenden werden drei Ausführungsbeispiele der Erfindung näher dargestellt. Es zeigen:
- FIG 1: eine Einrichtung zur Gewinnung von Wasser bei einer Kraftwerksanlage mit einer Wärmetauschvorrichtung,
- FIG 2: eine erfindungsgemäße Einrichtung mit einer Wärmepumpe, umfassend einen Verdampfer und einen Verflüssiger, und
- FIG 3: eine weitere erfindungsgemäße Einrichtung mit einer Wärmepumpe, wobei eine weitere Heizfläche zur zusätzlichen Wiederaufheizung des Abgasstroms vorgesehen ist.

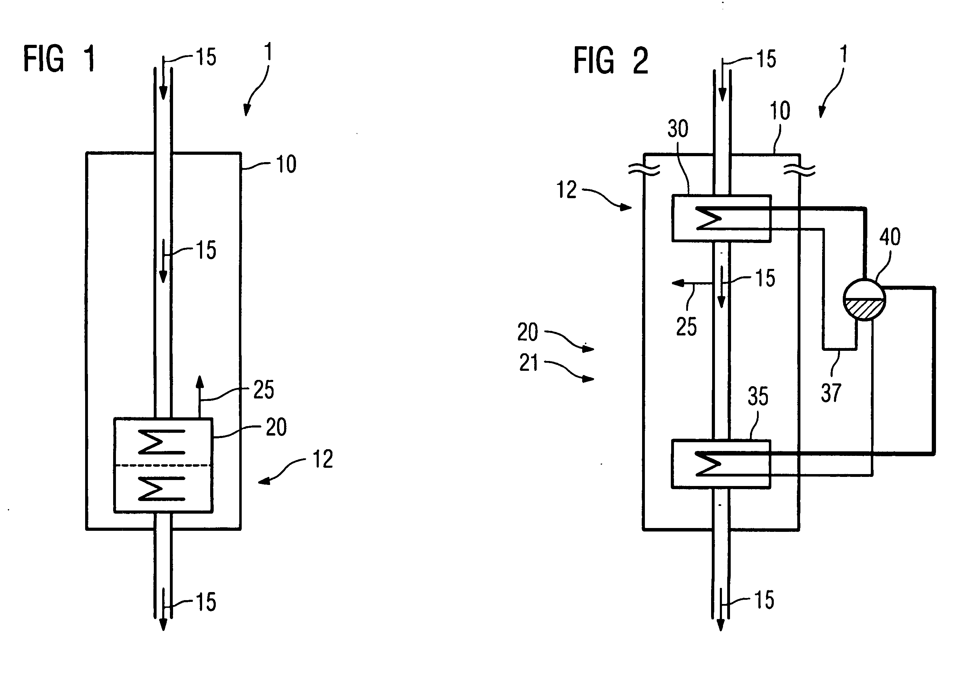

FIG 1 zeigt schematisch eine erfindungsgemäße Einrichtung 1 umfassend einen Abhitzekessel 10, in welchen Abgas 15 einer Gasturbine eingeleitet wird.

Am kalten Ende 12 des Abhitzekessels 10 ist eine Wärmetauschvorrichtung 20 angeordnet, mittels welcher das Abgas 15 unter den Taupunkt des Abgases 15 abgekühlt wird. In Strömungsrichtung des Abgases 15 können vor der Wärmetauschvorrichtung 20 (nicht dargestellte) Heizflächen angeordnet sein, um dem Abgas 15 beispielsweise zur Erzeugung von Betriebsdampf einer Dampfturbine Energie zu entziehen.

Bei der Abkühlung des Abgases 15 unter dessen Taupunkt schlägt sich die im Abgas 15 enthaltene Feuchtigkeit nieder und kann als Wasser 25 abgeführt und für den Kraftwerksbetrieb genutzt werden, beispielsweise zur Bereitstellung von Zusatzwasser.

Nach der Abkühlung des Abgases 15 kann dieses aus dem Abhitzekessel 10 ausgeleitet werden.

FIG 2 zeigt eine weitere erfindungsgemäße Einrichtung 1, bei welcher die Wärmetauschvorrichtung 20 ausgebildet ist als eine Wärmepumpe 21, welche einen Verdampfer 30 und einen Verflüssiger 35 umfasst.

Die Wärmepumpe 21 ist dabei wiederum am kalten Ende 12 des Abhitzekessels 10 angeordnet.

Das Abgas 15 der Gasturbine wird in den Abhitzekessel 10 eingeleitet und mittels des Verdampfers 30 unter den Taupunkt des Abgases 15, insbesondere unter 43°C, abgekühlt.

Durch den Verdampfer 30 ist ein Kühlmittel 37 geleitet, welches infolge des Wärmetausches mit dem Abgas 15 verdampft und in einer Dampftrommel 40 gesammelt und zum Verdampfer 30 rückgeführt wird. Bei der Abkühlung des Abgases 15 mittels des Verdampfers 30 wird die im Abgas 15 enthaltene Feuchtigkeit als Wasser 25 abgeschieden, welches für den Kraftwerksbetrieb nutzbar ist.

Das Abgas 15 wird nach seiner Abkühlung und Abscheidung des enthaltenen Wassers 25 im Verflüssiger 35 wieder aufgeheizt, so dass das den Abhitzekessel 10 verlassende Abgas 15 eine Temperatur oberhalb des Taupunkts des Abgases 15 aufweist, so dass gegebenenfalls nachzuschaltende Maßnahmen einer Schadstoffreduzierung des Abgases 15 erleichtert werden.

Beispielsweise weist das Abgas 15 vor dem Kontakt mit dem Verdampfer 30 eine Temperatur von 98°C auf. Das Abgas 15 wird dann mittels des Verdampfers 30 auf eine Temperatur von beispielsweise 40°C abgekühlt (der Taupunkt des Abgases 15 liegt etwa bei 43°C) und nach erfolgter Abscheidung des Wassers 25 wird das Abgas 15, welches nun eine Temperatur von etwa 40°C aufweist, mittels des Verflüssigers 35 wieder aufgeheizt auf eine Temperatur von etwa 90°C und danach aus dem Abhitzekessel 10 ausgeleitet.

Die Wiederaufheizung des Abgases 15 mittels des Verflüssigers 35 kann beispielsweise dadurch geschehen, dass bei der Abkühlung des Abgases 15 mittels des Verdampfers 30 erzeugter und in der Dampftrommel 40 gesammelter heißer Dampf als Heizmedium dem Verflüssiger 35 zugeführt wird, wobei dieser Dampf durch den Wärmetausch mit den abgekühlten Abgas, welches sich dadurch erwärmt, verflüssigt und zurück zur Dampftrommel 40 geführt wird.

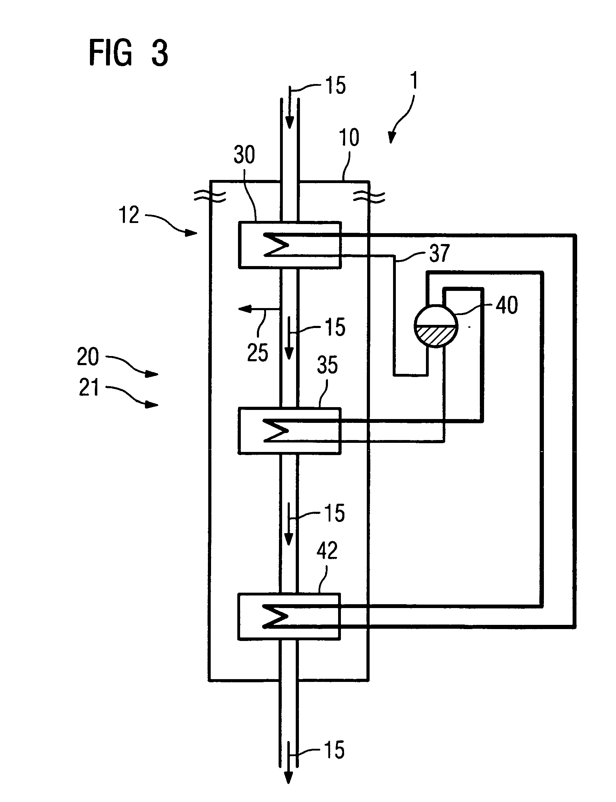

In der FIG 3 ist schematisch eine weitere Einrichtung 1 gemäß der Erfindung dargestellt, welche prinzipiell dieselbe Funktion aufweist wie die Ausführungsform gemäß FIG 2. Zusätzlich ist eine Heizfläche 42 vorgesehen, um den wiederaufgeheizten Dampf 15 nach dem Verflüssiger 35 weiteraufzuheizen. Die Heizfläche 42 kann dazu beispielsweise mittels vom Verdampfer 30 erzeugten Dampf gespeist sein welcher nach dessen Wärmetausch mit dem Abgas 15 in der Heizfläche 42 zurück zur Dampftrommel 40 geführt wird.

Zusammengefasst lässt sich die Erfindung folgendermaßen beschreiben:

Bei einem erfindungsgemäßen Verfahren und einer entsprechenden Einrichtung ist es vorgesehen, das Abgas einer Gasturbine unter dessen Taupunkt abzukühlen.

Dabei anfallendes Wasser kann dann für den Kraftwerksbetrieb genutzt werden, so dass insbesondere in wasserarmen Gegenden die Bereitstellung von (Zusatz)Wasser für den Kraftwerksbetrieb entfällt oder zumindest reduziert ist. Die Abkühlung des Abgases erfolgt bevorzugt am kalten Ende eines Abhitzekessels der Kraftwerksanlage, wobei zur Abkühlung des Abgases bevorzugt eine Wärmepumpe eingesetzt wird.

Die Wärmepumpe kann dabei einen Verdampfer zur Abkühlung des Abgases und Abscheidung des Wasseranteils im Abgas sowie einen Verflüssiger zur anschließenden Wiederaufheizung des Abgases umfassen.

## Patentansprüche

1. Verfahren zur Gewinnung von Wasser (25) bei einer Kraftwerksanlage, welche mindestens eine Gasturbine umfasst,
**dadurch gekennzeichnet, dass** zumindest ein Teil des Abgases (15) der Gasturbine mittels einer Wärmepumpe (21) unter dessen Taupunkt abgekühlt wird.

2. Verfahren nach Anspruch 1,
**dadurch gekennzeichnet, dass** die Kraftwerksanlage einen Abhitzekessel (10) umfasst, in welchen das Abgas (15) der Gasturbine eingeleitet wird.

3. Verfahren nach Anspruch 2,
**dadurch gekennzeichnet, dass** die Abkühlung des Abgases (15) am kalten Ende (12) des Abhitzekessels (10) vorgenommen wird.

4. Verfahren nach Anspruch einem der Ansprüche 1 bis 3,
**dadurch gekennzeichnet, dass** die Wärmepumpe (21) einen Verdampfer (30) und einen Verflüssiger (35) umfasst, wobei das Abgas (15) mittels des Verdampfers (30) abgekühlt und danach mittels des Verflüssigers (35) aufgeheizt wird.

5. Verfahren nach einem der Ansprüche 1 bis 4,
**dadurch gekennzeichnet, dass** die Kraftwerksanlage ausgebildet ist als ein Gas- und Dampfkraftwerk.

6. Einrichtung (1) zur Gewinnung von Wasser (25) bei einer Kraftwerksanlage, welche mindestens eine Gasturbine umfasst und mindestens eine Wärmetauschvorrichtung (20), mittels welcher mindestens ein Teil des Abgases (15) der Gasturbine unter dessen Taupunkt abkühlbar ist,
**dadurch gekennzeichnet, dass** die Wärmetauschvorrichtung (20) eine Wärmepumpe (21) umfasst.

7. Einrichtung (1) nach Anspruch 6,
**dadurch gekennzeichnet, dass** die Kraftwerksanlage einen Abhitzekessel (10) umfasst, in welchen das Abgas (15) der Gasturbine einleitbar ist.

8. Einrichtung (1) nach Anspruch 7,
**dadurch gekennzeichnet, dass** die Wärmetauschvorrichtung (20) am kalten Ende (12) des Abhitzekessels (10) angeordnet ist.

9. Einrichtung (1) nach einem der Ansprüche 6 bis 8,
**dadurch gekennzeichnet, dass** die Wärmepumpe (21) einen Verdampfer (30) und einen Verflüssiger (35) umfasst, wobei das Abgas (15) mittels des Verdampfers (30) abgekühlt und danach mittels des Verflüssigers (35) aufgeheizt wird.

10. Einrichtung (1) nach einem der Ansprüche 6 bis 9,
**dadurch gekennzeichnet, dass** die Kraftwerksanlage ausgebildet ist als ein Gas- und Dampfkraftwerk.

## Claims

1. Method for extracting water (25) in a power plant having at least one gas turbine,
**characterised in that**
at least a part of the exhaust gas (15) of the gas turbine is cooled below the dew point by means of a heat pump (21).

2. Method according to claim 1,
**characterised in that**
the power plant has a waste heat boiler (10), into which the exhaust gas (15) of the gas turbine is fed.

3. Method according to claim 2,
**characterised in that**
the exhaust gas (15) is cooled at the cold end (12) of the waste heat boiler (10).

4. Method according to one of claims 1 to 3,
**characterised in that**
the heat pump (21) has an evaporator (30) and a condenser (35), with the exhaust gas (15) being cooled using the evaporator (30) and subsequently heated using the condenser (35).

5. Method according to one of claims 1 to 4,
**characterised in that**
the power plant is designed as a gas and steam electric power plant.

6. Device (1) for extracting water (25) in a power plant, comprising at least one gas turbine and at least one heat exchange device (20), by means of which at least a part of the exhaust gas (15) of the gas turbine can be cooled below its dew point,
**characterised in that**
the heat exchange device (20) comprises a heat pump (21).

7. Device (1) according to claim 6,
**characterised in that**
the power plant comprises a waste heat boiler (10), into which can be fed the exhaust gas (15) of the gas turbine.

8. Device (1) according to claim 7,
**characterised in that**
the heat exchange device (20) is arranged at the cold end (12) of the waste heat boiler (10).

9. Device (1) according to one of claims 6 to 8,
**characterised in that**
the heat pump (21) has an evaporator (30) and a condenser (35), with the exhaust gas (15) being cooled down by means of the evaporator (30) and being subsequently heated by means of the condenser (35).

10. Device (1) according to one of claims 6 to 9,
**characterised in that**
the power plant is designed as a gas and steam electric power plant.

## Revendications

1. Procédé de récupération d'eau (25) dans une centrale électrique qui comprend au moins une turbine à gaz, **caractérisé en ce que** l'on refroidit au moins une partie du gaz (15) d'échappement de la turbine à gaz en dessous de son point de rosée au moyen d'une pompe (21) à chaleur.

2. Procédé suivant la revendication 1, **caractérisé en ce que** la centrale électrique comprend une chaudière (10) à récupération de la chaleur perdue dans laquelle le gaz (15) d'échappement de la turbine à gaz est envoyé.

3. Procédé suivant la revendication 2, **caractérisé en ce que** l'on effectue le refroidissement du gaz (15) d'échappement à l'extrémité (12) froide de la chaudière (10) à récupération de la chaleur perdue.

4. Procédé suivant l'une des revendications 1 à 3, **caractérisé en ce que** la pompe (21) à chaleur comprend un évaporateur (30) et un condenseur (35), le gaz (15) d'échappement étant refroidi au moyen de l'évaporateur (30) et étant ensuite chauffé au moyen du condenseur (35).

5. Procédé suivant l'une des revendications 1 à 4, **caractérisé en ce que** la centrale électrique est constituée sous la forme d'une centrale à gaz et à vapeur.

6. Dispositif (1) de récupération d'eau (25) dans une centrale électrique qui comprend au moins une turbine à gaz et au moins un dispositif (20) d'échange de chaleur au moyen duquel au moins une partie du gaz (15) d'échappement de la turbine à gaz peut être refroidie en dessous de son point de rosée,
**caractérisé en ce que** le dispositif (20) d'échange de chaleur comprend une pompe (21) à chaleur.

7. Dispositif (1) suivant la revendication 6,
**caractérisé en ce que** la centrale électrique comprend une chaudière (10) à récupération de la chaleur perdue dans laquelle le gaz (15) d'échappement de la turbine à gaz peut être envoyé.

8. Dispositif (1) suivant la revendication 7,
**caractérisé en ce que** l'on effectue le refroidissement du gaz (15) d'échappement à l'extrémité (12) froide de la chaudière (10) à récupération de la chaleur perdue.

9. Dispositif (1) suivant l'une des revendications 6 à 8,
**caractérisé en ce que** la pompe (21) à chaleur comprend un évaporateur (30) et un condenseur (35), le gaz (15) d'échappement étant refroidi au moyen de l'évaporateur (30) et étant ensuite chauffé au moyen du condenseur (35).

10. Dispositif (1) suivant l'une des revendications 6 à 9,
la centrale électrique est constituée sous la forme d'une centrale à gaz et à vapeur.
